# EUROPEAN PATENT SPECIFICATION

(11) **EP 3 640 805 B1**
(45) Date of publication and mention of the grant of the patent: **22.05.2024**
(21) Application number: 18823614.5
(22) Date of filing: 29.06.2018
(51) Int. Cl.: G06F 30/34, H04J 3/04, H04J 3/16

(54) **METHOD AND APPARATUS FOR IMPLEMENTING WHITE-BOX OTN HARDWARE DEVICE, AND STORAGE MEDIUM**
VERFAHREN UND VORRICHTUNG ZUR IMPLEMENTIERUNG EINER WHITEBOX-OTN-HARDWAREVORRICHTUNG UND SPEICHERMEDIUM
PROCÉDÉ ET APPAREIL POUR METTRE EN UVRE UN DISPOSITIF MATÉRIEL DE RÉSEAU OTN DE BOÎTE BLANCHE, ET SUPPORT D'INFORMATIONS

(30) Priority: 30.06.2017 CN 201710520007
(43) Date of publication of application: 22.04.2020
(73) Proprietor: ZTE Corporation, Shenzhen, Guangdong 518057 (CN)
(72) Inventor: LIU, Dawei, Shenzhen Guangdong 518057 (CN)
(74) Representative: Baudler, Ron
(86) International application number: PCT/CN2018/093601
(87) International publication number: WO 2019/001565

(56) References cited:
- WO-A1-2016/086704
- CN-A- 103 559 028
- CN-A- 103 746 746
- CN-A- 104 506 365
- Nn: "Packet-Optical Transport System Switch Fabric OTN Family | 100G ODU2 Mapper and Multiplexer | TPO215", , 1 April 2013 (2013-04-01), pages 1-2, XP055791136, Retrieved from the Internet: URL:https://www.intel.com/content/dam/www/ programmable/us/en/pdfs/literature/po/ss-t po215.pdf [retrieved on 2021-03-29]
- WILLIAM SZETO XTERA COMMUNICATIONS ET AL: "SDN Controlled "White Box" or Open Network Applications;WD 1214-20", ITU-T DRAFT ; STUDY PERIOD 2013-2016, INTERNATIONAL TELECOMMUNICATION UNION, GENEVA ; CH, vol. 12/15,14/15, 14 April 2016 (2016-04-14), pages 1-3, XP044166369, [retrieved on 2016-04-14]
- MANGGALA ADITYA WIDYA ET AL: "Performance analysis of white box switch on Software Defined Networking using open vSwitch", 2015 1ST INTERNATIONAL CONFERENCE ON WIRELESS AND TELEMATICS (ICWT), IEEE, 17 November 2015 (2015-11-17), pages 1-7, XP032889989, DOI: 10.1109/ICWT.2015.7449257 ISBN: 978-1-4673-8433-9 [retrieved on 2016-04-07]
- NEJABATI REZA ET AL: "Toward a completely softwareized optical network [Invited]", JOURNAL OF OPTICAL COMMUNICATIONS AND NETWORKING, INSTITUTE OF ELECTRICAL AND ELECTRONICS ENGINEERS, US, vol. 7, no. 12, 1 December 2015 (2015-12-01), XP011596529, ISSN: 1943-0620, DOI: 10.1364/JOCN.7.00B222 [retrieved on 2015-12-28]

## Description

### TECHNICAL FIELD

The present disclosure relates to the technical field of communication, and in particular, to a method and an apparatus for implementing a white-box optical transport network (OTN) hardware device, and a computer-readable storage medium.

### BACKGROUND

In the technical field of optical network transmission, communication device manufacturers generally tie software and hardware together during the process of developing transmission devices, that is, adopt a development mode under which software and hardware are highly coupled.

D1: WILLIAM SZETO XTERA COMMUNICATIONS ET AL: "SDN Controlled "White Box" or Open Network Applications;WD 1214-20",ITU-T DRAFT ; STUDY PERIOD 2013-2016, INTERNATIONAL TELECOMMUNICATION UNION, GENEVA ; CH, vol. 12/15,14/15, 14 April 2016 (2016-04-14), pages 1-3. D2: MANGGALA ADITYA WIDYA ET AL: "Performance analysis of white box switch on Software Defined Networking using open vSwitch",2015 1ST INTERNATIONAL CONFERENCE ON WIRELESS AND TELEMATICS (ICWT), IEEE, 17 November 2015 (2015-11-17), pages 1-7, DOI:10.1109/ICWT.2015.7449257ISBN: 978-1-4673-8433-9. D3: NEJABATI REZA ET AL: "Toward a completely softwareized optical network [Invited] "JOURNAL OF OPTICAL COMMUNICATIONS AND NETWORKING, INSTITUTE OF ELECTRICAL AND ELECTRONICS ENGINEERS, US, vol. 7, no. 12, 1 December 2015 (2015-12-01), ISSN: 1943-0620, DOI: 10.1364/JOCN.7.00B222. D4: NN: "Packet-Optical Transport System Switch Fabric OTN Family | 100G ODU2 Mapper and Multiplexer | TPO215",, 1 April 2013 (2013-04-01), pages 1-2, XP055791136,Retrieved from the Internet: https://www.intel.com/ content/dam/www/programmable/us/en/pdfs/literature/po/ss-tpo215.pdf.

D1 relates to SDN Controlled "White Box" or Open Network Applications. D2 relates to Performance analysis of white box switch on Software Defined Networking using open vSwitch. D3 relates to Toward a completely softwareized optical network [Invited]. D4 relates to Packet-Optical Transport System Switch Fabric OTN Family |100G ODU2 Mapper and Multiplexer | TPO215.

### SUMMARY

In one aspect, according to claim 1, the present disclosure provides a method for implementing a white-box OTN hardware device, including the steps of: performing an abstraction processing on a hardware device used by an OTN device and making a constraint rule to form a low-level Application Programming Interface (API); acquiring a customization description file of the low-level API inputted by a user, and automatically generating a connection code between a public code and a user code according to the customization description file of the low-level API inputted by the user. The method is defined by independent claim 1.

In another aspect, according to independent claim 4, the present disclosure provides an apparatus for implementing a white-box OTN hardware device, including: a first abstraction processing module configured to perform an abstraction processing on a hardware device used by an OTN device and make a constraint rule to form a low-level API; and a compiler configured to acquire a customization description file of the low-level API inputted by a user, and automatically generate a connection code between a public code and a user code according to the customization description file of the low-level API inputted by the user, such that a low-level service logic is processed publically. The apparatus is further defined by independent claim 4.

In another aspect, according to claim 7, the present disclosure provides an apparatus for implementing a white-box OTN hardware device, including: a memory, a processor, and an abstraction program of the white-box OTN hardware device stored on the memory and operable on the processor, wherein the abstraction program of the white-box OTN hardware device, when executed by the processor, implements the steps of the method for implementing the white-box OTN hardware device described herein.

In another aspect, according to caim 8, the present disclosure provides a computer-readable storage medium having stored thereon an abstraction program of a white-box OTN hardware device, which, when executed by a processor, implements the steps of the method for implementing the white-box OTN hardware device described herein.

### BRIEF DESCRIPTION OF THE DRAWINGS

FIG. 1 is a schematic flowchart of a method for implementing the white-box OTN hardware device according to an embodiment of the present disclosure;
FIG. 2 is a schematic flowchart illustrating an abstraction process and a constraint rule making process in the method for implementing the white-box OTN hardware device according to an embodiment of the present disclosure;
FIG. 3 is a schematic flowchart of an atomic function abstraction in the method for implementing the white-box OTN hardware device according to an embodiment of the present disclosure;
FIG. 4 is another flowchart of the method for implementing the white-box OTN hardware device according to an embodiment of the present disclosure;
FIG. 5 is a schematic structural diagram of an apparatus for implementing the white-box OTN hardware device according to an embodiment of the present disclosure;
FIG. 6 is a schematic structural diagram of a first abstraction processing module in the apparatus for implementing the white-box OTN hardware device according to an embodiment of the present disclosure;
FIG. 7 is another schematic structural diagram of the apparatus for implementing the white-box OTN hardware device according to an embodiment of the present disclosure;
FIG. 8 is a schematic structural diagram of the apparatus for implementing the white-box OTN hardware device according to an embodiment of the present disclosure;
FIG. 9 is a schematic structural diagram of an abstract system of the white-box OTN hardware device according to an embodiment of the present disclosure.

The achievement of objects, functional features, and advantages of the present disclosure will be further described with reference to the accompanying drawings.

### DETAILED DESCRIPTION

For a clearer understanding of the technical problems to be solved, the technical solutions to be adopted, and the technical effect to be achieved by the present disclosure, the present disclosure is further described in detail below with reference to the accompanying drawings and embodiments. It should be understood that the specific embodiments described herein are merely intended to explain the present disclosure only rather than to restrict the present disclosure.

In the technical field of optical network transmission, communication device manufacturers generally tie software and hardware together during the process of developing transmission devices, that is, adopt a development mode in which software and hardware are highly coupled.

This mode of development suffers from the following drawbacks. Firstly, upper level software cannot be reused due to hardware differences between device boards, which results in a large amount of repeated development. Secondly, due to hardware difference, each project and product need to be restarted from the very beginning each time, while replacement of personnel and change of developers make it impossible to inherit historical experience and excellent design effectively. This would further lead to a great deal of waste of design, development and test. In addition, as the operators and the internet are in continuous pursuit of shorter and shorter development periods, customers come up with new severe requirements on the development period at the device manufacturer's side, and such requirements cannot be satisfied by the existing development mode. Moreover, in order to meet the customer's severe requirement for shortening the development period, it is necessary to improve the automation level of development and testing at the device manufacturer's side, but the existing development mode makes it difficult to develop automation. Finally, with the high-speed development of SDN (Software Defined Network) and NFV (Network Function Virtualization), future devices are required to have increasingly open interoperability, and better performance and flexibility, which further require the device manufacturer to obviate hardware difference as much as possible and perform high-level abstraction on hardware devices, thereby realizing separation of software and hardware.

Accordingly, the present disclosure particularly provides a method and an apparatus for implementing a white-box optical transport network (OTN) hardware device, and a computer-readable storage medium, which substantially obviate one or more of the problems due to limitations and disadvantages of the related art.

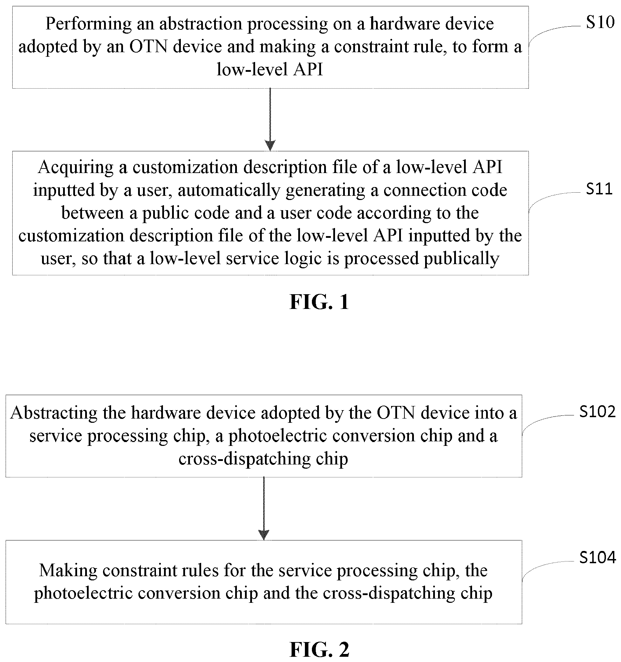

In one aspect, the present disclosure provides a method for implementing a white-box OTN hardware device. FIG. 1 is a schematic flowchart of a method for implementing a white-box OTN hardware device according to an embodiment of the present disclosure. Referring to FIG. 1, in some embodiments, the method may include step S10.

At step S 10, an abstraction processing is performed on a hardware device used by an OTN (Optical Transport Network) device and a constraint rule is made, so as to form a low-level API (Application Programming Interface).

FIG. 2 is a schematic flowchart of the abstraction processing and constraint rule making in a method for implementing a white-box OTN hardware device according to an embodiment of the present disclosure. Referring to FIG. 2, in some embodiments, performing an abstraction processing on a hardware device used by the OTN device and making a constraint rule may include step S102 and step S104.

At step S102, the hardware device used by the OTN device is abstracted into a service processing chip, a photoelectric conversion chip, and a cross-dispatching chip.

At step S104, constraint rules of the service processing chip, the photoelectric conversion chip, and the cross-dispatching chip are made.

In the disclosed embodiment, the idea of white-box technology is adopted, from the perspective of OTN device, the hardware device adopted to form the OTN device is abstracted into three types of chips, i.e., service processing chip, photoelectric conversion chip and cross-dispatching chip; and from the perspective of optical transmission device service, constraint rules are made for the three types of chips forming the OTN device, so as to form an API function based on the service rules and an agreement of input parameters thereof. In the process of hardware type selection, chips from any manufacturer must have the function, and an SDK (Software Development Kit) or a combination of SDKs capable of implementing the function needs to be provided.

Referring to FIG. 1, the method may further include step S11. At step S11, a customization description file of the low-level API inputted by the user is acquired, and a connection code between the public code and the user code is automatically generated according to the customization description file of the low-level API inputted by the user, so that the low-level service logic is processed publically.

In the disclosed embodiment, DSL (Domain Specific Language) technology may be adopted to abstract the differences between the service processing chip, the photoelectric conversion chip, and the cross-dispatching chip to form the customization description file. The user code for implementing hardware privatization is separated from the public control logic.

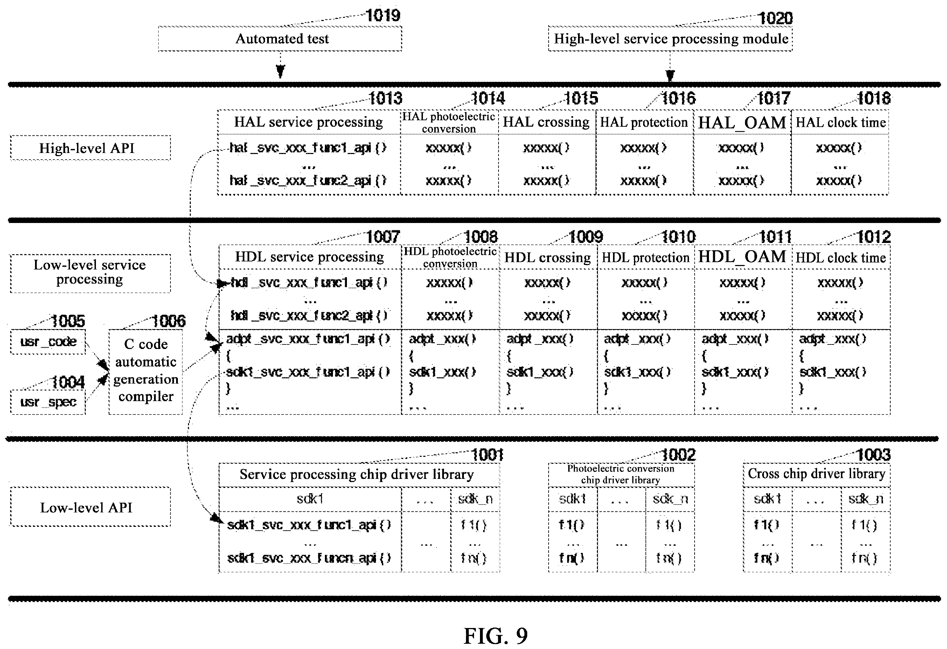

To better illustrate the disclosed embodiment, reference is now made to FIG. 9. FIG. 9 is a schematic structural diagram of an abstract system of the white-box OTN hardware device according to an embodiment of the present disclosure.

In some embodiments, the system of FIG. 9 may include: a service processing chip driver library 1001, a photoelectric conversion chip driver library 1002, a cross chip driver library 1003, a customization description file 1004, a customization private code 1005, a C code automatic generation compiler 1006, an HDL service processing module 1007, an HDL photoelectric conversion module 1008, an HDL cross dispatching module 1009, an HDL protection swapping module 1010, an HDL performance alarm maintenance management module 1011, an HDL clock time processing module 1012, an HAL service processing module 1013, an HAL photoelectric conversion module 1014, an HAL cross dispatching module 1015, an HAL protection swapping module 1016, an HAL performance alarm maintenance management module 1017, an HAL clock time processing module 1018, an automated test 1019, and a high-level service processing module 1020.

Based on the understanding of OTN service, eight functions may be abstracted laterally: (1) service configuration management, (2) photoelectric conversion configuration management, (3) cross dispatching configuration management, (4) protection swapping configuration management module, (5) performance alarm configuration management module, (6) clock time configuration management module, (7) automated test module, and (8) high-level service processing module.

Below, (1) service configuration management is taken as an example for explanation.

In the service processing chip driver library 1001, it is assumed that two types of chips, chip a and chip b, exist in the driver library, and configuration of OTN split service needs to be realized, the constraint rule of the SDK must satisfy the following form:
UINT32 xxxx_svc_cfg_otu_oduj21_api(TOduj32Para oduj21_para)

Based on the above assumptions, it is necessary for chip a to implement: UINT32 sdk_a_svc_cfg_otu_oduj21_api (TOduj32Para oduj21_para), the chip calls SDK of its own to complete the configuration function of the split service; for chip b, it must also implement: UINT32 sdk_b_svc_cfg_otu_oduj21_api(TOduj32Para oduj21_para), the chip calls SDK of its own to complete the configuration function of the split service.

In the customization description file 1004, assuming that the user uses chip a, the user indicates in the description file that the service chip used is chip a, i.e., {svc_chip_name, a}.

When the C code automatic generation compiler 1006 reads the description {svc_chip_name, a} from the customization description file 1004, an implementation code of an ADPT interface on the lower half of an HDL (Hardware Description Language) service processing module 1007 is automatically generated, i.e., UINT32 adpt_svc_cfg_otu_oduj21_api(TOduj32Para oduj21_para) {return sdk_a_svc_cfg_otu_oduj21_api(TOduj32Para oduj21_para);}.

The upper half of the HDL service processing module 1007 performs related public processing based on a corresponding function decomposed by the HAL (Hardware Abstraction Layer) service processing module 1013, and calls adpt_svc_cfg_otu_oduj21_api according to an input structure oduj21_para to complete the public processing function that the layer needs to implement.

The (2) photoelectric conversion configuration management and (3) cross dispatching configuration management are similar to (1) service configuration management in processing manner, which will not be described herein again.

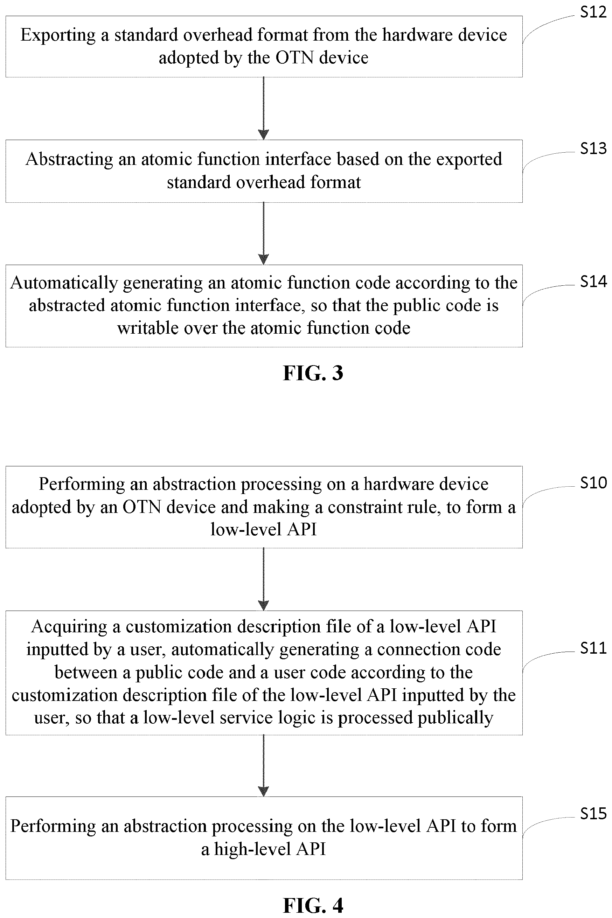

FIG. 3 is a schematic flowchart of atomic function abstraction in the method for implementing the white-box OTN hardware device according to an embodiment of the present disclosure. Referring to FIG. 3, in some embodiments, to implement standardized processing of protection swapping, the method may further include steps S12 to S 14.

At step S12, a standard overhead format is exported from the hardware device used by the OTN device.

In some embodiments, the standard overhead format may be exported from diverse chips by using FPGA to export the overhead that conforms to the ITU-TG.709 standard from the SDK.

At step S 13, an atomic function interface is abstracted based on the exported standard overhead format.

At step S14, an atomic function code is automatically generated according to the abstracted atomic function interface, so that a public code may be written over the atomic function code.

In the below, (4) protection swapping configuration management module is taken as an example for explanation with reference to FIG. 9.

For (4) protection swapping configuration management module, the module mainly imports the overhead of a service chip into an FPGA (Field Programmable Gate Array), and implements service swapping based on alarm change that is interrupted via configuration of the FPGA.

The module abstracts functions of the protection configuration command from the perspective of service, abstracts a plurality of atomic function interfaces, and restricts FPGA hardware developers based on the atomic function interfaces and requires the FPGA developers to cover these atomic functions.

Based on these atomic function interfaces, an FPGA address corresponding to the atomic function interface is described in the customization description file 1004, a read-write function for reading and writing the FPGA address is registered in the customization private code 1005,the C code automatic generation compiler 1006 automatically generates an atomic functional function required by the HDL layer, and the HDL layer completes a combination of atomic functions which is supplied to the HAL layer to use.

The (6) clock time configuration management module is similar to the (4) protection swapping configuration management module in processing manner, which is not described herein again.

For (5) performance alarm configuration management module, the performance alarm module has several characteristics: firstly, the performance alarm quantity is huge; secondly, the performance alarm processing is simple, which is only to call one SDK or to read and write one register address. Based on the above two characteristics, in the description of the customization description file 1004, what need to be described are merely the API in which SDK needs to be used for a certain alarm and what type of parameters the API needs to fill in; the C code automatic generation compiler 1006 automatically generates a performance alarm function required by the HDL layer and a combined function based on the atomic functions, which is supplied for the HAL layer to call.

FIG. 4 is another flowchart of a method for implementing the white-box OTN hardware device according to an embodiment of the present disclosure. Referring to FIG. 4, in some embodiments, the method further includes step S15 in addition to step S10 and step S11 (see the description of FIG. 1 for details).

At step S15, an abstraction processing is performed on the low-level API to form a high-level API.

In the disclosed embodiment, because the granularity of the low-level API is relatively fine, abstraction processing needs to be performed again on this basis to form a higher-level API that is convenient and flexible for a user to use. The low-level API is further abstracted from the perspective of high level use, so as to form a condensed and cohesive API for a high-level user.

The high-level API may be supplied to high-level users such as NOS (Network Operating System), SDN (Software Defined Network) and the like to use. In addition, since the high-level API is simple, cohesive and relatively stable, it is possible to develop automation script on such basis, to thereby providing a quick feedback mechanism for a quick-launched product. In addition, since the simplified high-level API is irrelevant to hardware, it matches with the requirements of SDN and the NVF thereof quite well.

The (7) automated testing module and (8) high-level service processing module illustrated in FIG. 9 are taken as an example for explanation.

For (7) automated testing module, automated acceptance tests are developed based on a standard interface of the HAL layer.

For (8) high-level application module, it mainly calls interfaces of the HAL layer, which are irrelevant to hardware, to complete high-level functions such as SDN, WASON (WDM/OTN Automatically Switched Optical Network) and NOS.

According to a method for implementing the white-box OTN hardware device of an embodiment of the present disclosure, the hardware device adopted by the OTN device is abstracted to form a low-level API, a connection code between a public code and a user code is automatically generated according to a customization description file of the low-level API inputted by the user, which realizes public processing of low-level service logic and decoupling of software and hardware of the white-box OTN, obviates repeated development of software caused by hardware difference, and since the design, development and test need not to start from zero in the process of hardware replacement, thus saves time from development to launch.

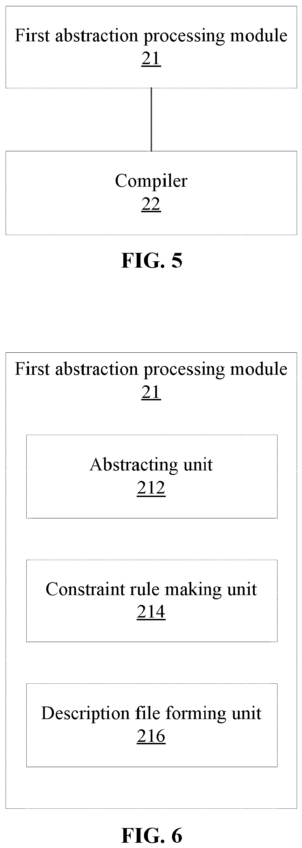

In another aspect, the present disclosure provides an apparatus for implementing a white-box OTN hardware device. FIG. 5 is a schematic structural diagram of an apparatus for implementing a white-box OTN hardware device according to an embodiment of the present disclosure. As shown in FIG. 5, in some embodiments, the apparatus for implementing a white-box OTN hardware device may include a first abstraction processing module 21 and a compiler 22.

The first abstraction processing module 21 may be configured to perform an abstraction processing on a hardware device used by the OTN device and make a constraint rule, so as to form a low-level API.

FIG. 6 is a schematic structural diagram of a first abstraction processing module in the apparatus for implementing a white-box OTN hardware device according to an embodiment of the present disclosure. Referring to FIG. 6, in some embodiments, the first abstraction processing module 21 may include an abstracting unit 212 and a constraint rule making unit 214.

The abstracting unit 212 may be configured to abstract a hardware device used by the OTN device into a service processing chip, a photoelectric conversion chip, and a cross-dispatching chip.

The constraint rule making unit 214 may be configured to make constraint rules of the service processing chip, the photoelectric conversion chip and the cross-dispatching chip.

In the disclosed embodiment, the idea of the white-box technology is adopted, from the perspective of OTN device, the hardware device adopted to form the OTN device is abstracted into three types of chips, i.e., a service processing chip, a photoelectric conversion chip and a cross-dispatching chip; and from the perspective of optical transmission device service, constraint rules are made for the three types of chips forming the OTN device, so as to form a function of an API based on service rules and an agreement of input parameters thereof. In the process of hardware type selection, chips from any manufacturer must have the function, and an SDK (Software Development Kit) or a combination of SDKs capable of implementing the function needs to be provided.

The compiler 22 may be configured to acquire a customization description file of the low-level API inputted by the user, and automatically generate a connection code between a public code and a user code according to the customization description file of the low-level API inputted by the user, such that a low-level service logic is processed publically.

With continued reference to FIG. 6, in some embodiments, the apparatus further includes a description file forming unit 216.

The description file forming unit 216 may be configured to abstract the differences between the service processing chip, the photoelectric conversion chip, and the cross-dispatching chip to form the customization description file by using DSL technology. The user code for implementing hardware privatization is separated from the public control logic.

To better illustrate the disclosed embodiment, reference is now made to FIG. 9.

In some embodiments, the system of FIG. 9 may include: a service processing chip driver library 1001, a photoelectric conversion chip driver library 1002, a cross chip driver library 1003, a customization description file 1004, a customization private code 1005, a C code automatic generation compiler 1006, an HDL service processing module 1007, an HDL photoelectric conversion module 1008, an HDL cross dispatching module 1009, an HDL protection swapping module 1010, an HDL performance alarm maintenance management module 1011, an HDL clock time processing module 1012, an HAL service processing module 1013, an HAL photoelectric conversion module 1014, an HAL cross dispatching module 1015, an HAL protection swapping module 1016, an HAL performance alarm maintenance management module 1017, an HAL clock time processing module 1018, an automated test 1019, and a high-level service processing module 1020.

Based on the understanding of the OTN service, eight functions can be abstracted laterally: (1) service configuration management, (2) photoelectric conversion configuration management, (3) cross dispatching configuration management, (4) protection swapping configuration management module, (5) performance alarm configuration management module, (6) clock time configuration management module, (7) automated test module, and (8) high-level service processing module.

Below, description is made by taking (1) service configuration management as an example.

In the service processing chip driver library 1001, it is assumed that two types of chips, chip a and chip b, exist in the driver library, and that configuration of OTN split service needs to be implemented, the constraint rule of the SDK must satisfy the following form:
UINT32 xxxx_svc_cfg_otu_oduj21_api(TOduj32Para oduj21_para)

Based on the above assumptions, it is necessary for chip a to implement: UINT32 sdk_a_svc_cfg_otu_oduj21_api(TOduj32Para oduj21_para), the chip calls SDK of its own to complete the configuration function of the split service; for chip b, it must also implement: UINT32 sdk_b_svc_cfg_otu_oduj21_api(TOduj32Para oduj21_para), the chip calls SDK of its own to complete the configuration function of the split service.

In the customization description file 1004, assuming that the user uses chip a, the user indicates in the description file that the service chip used is chip a, i.e., {svc_chip name, a}.

When the C code automatic generation compiler 1006 reads the description {svc_chip_name, a} in the customization description file 1004, an implementation code of an ADPT interface on the lower half of an HDL (Hardware Description Language) service processing module 1007 is automatically generated, i.e., UINT32 adpt_svc_cfg_otu_oduj21_api(TOduj32Para oduj21_para) {return sdk_a_svc_cfg_otu_oduj21_api(TOduj32Para oduj21_para);}.

The upper half of the HDL service processing module 1007 performs related public processing based on a corresponding function decomposed by the HAL (Hardware Abstraction Layer) service processing module 1013, and calls adpt_svc_cfg_otu_oduj21_api according to an input structure oduj21_para to complete the public processing function that the layer needs to implement.

The (2) photoelectric conversion configuration management and (3) cross dispatching configuration management are similar to (1) service configuration management in processing manner, which will not be described herein again.

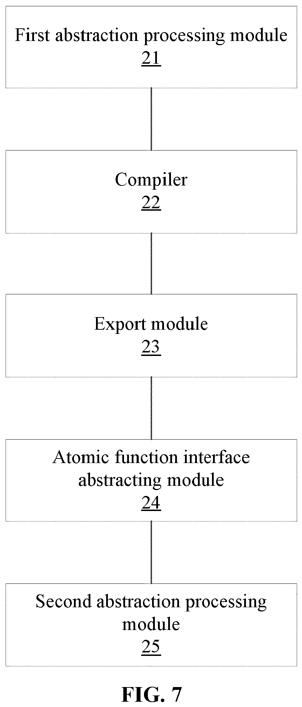

FIG. 7 is another schematic structural diagram of the apparatus for implementing a white-box OTN hardware device according to an embodiment of the present disclosure. Referring to FIG. 7, in some embodiments, to implement the standardized processing of protection swapping, the apparatus may further include an export module 23 and an atomic function interface abstracting module 24.

The export module 23 may be configured to export a standard overhead format from a hardware device used by the OTN device.

In some embodiments, the export module 23 may export the standard overhead format from diverse chips by using FPGA to export an overhead that conforms to the ITU-TG.709 standard from SDK.

The atomic function interface abstracting module 24 may be configured to abstract an atomic function interface based on the exported standard overhead format.

In some embodiments, the compiler 22 may be further configured to automatically generate an atomic function code based on the abstracted atomic function interface, so that a public code may be written over the atomic function code.

In the below, (4) protection swapping configuration management module is taken as an example for explanation with reference to Fig.9.

For (4) protection swapping configuration management module, the module mainly imports the overhead of a service chip into an FPGA (Field Programmable Gate Array), and implements service swapping based on alarm change that is interrupted via configuration of the FPGA.

The module abstracts functions of the protection configuration command from the perspective of service, abstracts a plurality of atomic function interfaces, and restricts FPGA hardware developers based on the atomic function interfaces and requires the FPGA developers to cover these atomic functions.

Based on these atomic function interfaces, an FPGA address corresponding to the atomic function interface is described in the customization description file 1004, a read-write function for reading and writing the FPGA address is registered in the customization private code 1005,the C code automatic generation compiler 1006 automatically generates an atomic functional function required by the HDL layer, and the HDL layer completes a combination of atomic functions, which is supplied for the HAL layer to use.

The (6) clock time configuration management module is similar to the (4) protection swapping configuration management module in processing manner, which is not described herein again.

For the (5) performance alarm configuration management module, the performance alarm module has several characteristics: firstly, the performance alarm quantity is huge; secondly, the performance alarm processing is simple, which is only to call one SDK or read and write one register address. Based on the above two characteristics, in the description of the customization description file 1004, what need to be described are merely the API in which SDK needs to be used for a certain alarm and what type of parameters the API needs to fill in; the C code automatic generation compiler 1006 automatically generates a performance alarm function required by the HDL layer, and a combined function of the atomic functions for the HAL layer to call.

Referring to FIG. 7, in some embodiments, the apparatus further includes a second abstraction processing module 25.

The second abstraction processing module 25 may be configured to perform an abstraction processing on the low-level API to form a high-level API.

In the disclosed embodiment, because the granularity of the low-level API is relatively fine, abstraction processing needs to be performed again on such basis, so to form a higher-level API that is convenient and flexible for a user to use. The low-level API is further abstracted from the perspective of high level use, so as to form a condensed and cohesive API for a high-level user.

The high-level API may be supplied to high-level users such as NOS (Network Operating System), SDN (Software Defined Network) and the like to use. In addition, since the high-level API is simple, cohesive and relatively stable, it is possible to develop automation script on such basis, to thereby providing a quick feedback mechanism for a quick-launched product. In addition, since the simplified high-level API is irrelevant to hardware, it matches with the requirements of SDN and NVF thereof well.

The (7) automated testing module and (8) high-level service processing module illustrated in FIG. 9 are taken as an example for explanation.

For (7) automated testing module, automated acceptance tests are developed based on a standard interface of the HAL layer.

For (8) high-level application module, it mainly calls interfaces of HAL layer, which are irrelevant to hardware, to complete high-level functions such as SDN, WASON (WDM/OTN Automatically Switched Optical Network) and NOS.

In an apparatus for implementing the white-box OTN hardware device according to an embodiment of the present disclosure, the hardware device used by the OTN device is abstracted to form a low-level API, a connection code between a public code and a user code is automatically generated according to a customization description file of the low-level API inputted by the user, which realizes public processing of low-level service logic, decoupling of software and hardware of the white-box OTN, obviates repeated development of software caused by hardware difference, and since design, development and test need not to start from zero in the process of hardware replacement, thus saves time from development to launch.

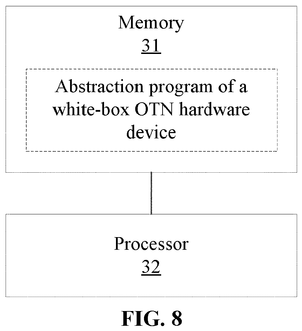

In another aspect, the present disclosure provides an apparatus for implementing a white-box OTN hardware device. FIG. 8 is a schematic structural diagram of the apparatus for implementing the white-box OTN hardware device according to an embodiment of the present disclosure. Referring to FIG. 8, in some embodiments, the apparatus for implementing the white-box OTN hardware device includes: a memory 31, a processor 32 and an abstraction program of a white-box OTN hardware device stored on the memory 31 and operable on the processor 32, which, when executed by the processor, implements the steps of the method for implementing a white-box OTN hardware device described herein.

In an apparatus for implementing the white-box OTN hardware device according to an embodiment of the present disclosure, the hardware device used by the OTN device is abstracted to form a low-level API, a connection code between a public code and a user code is automatically generated according to a customization description file of the low-level API inputted by the user, which realizes public processing of low-level service logic, decoupling of software and hardware of the white-box OTN, obviates repeated development of software caused by hardware difference, and since the design, development and test need not to start from zero in the process of hardware replacement, thus saves time from development to launch.

In another aspect, the present disclosure provides a computer-readable storage medium. In some embodiments, the computer-readable storage medium has stored thereon an abstraction program of a white-box OTN hardware device, which, when executed by a processor, implements the steps of the method for implementing a white-box OTN hardware device described herein.

According to a computer-readable storage medium of an embodiment of the present disclosure, the hardware device used by the OTN device is abstracted to form a low-level API, a connection code between a public code and a user code is automatically generated according to a customization description file of the low-level API inputted by the user, which realizes public processing of low-level service logic, decoupling of software and hardware of the white-box OTN, obviates repeated development of software caused by hardware difference, and since the design, development and test need not to start from zero in the process of hardware replacement, thus saves time from development to launch.

It should be noted that the embodiments of the apparatus and method described above belong to the same concept, and the specific implementation process of the apparatus is described in detail in the method embodiments, and the technical features in the method embodiments are correspondingly applicable in the apparatus embodiments, which will not described herein again.

Through the above description of the embodiments, those skilled in the art will clearly understand that the method for the above embodiments can be implemented by software plus a necessary general hardware platform, and certainly can also be implemented by hardware, but in many cases, the former is a better embodiment. Based on such understanding, the technical solutions of the present disclosure substantially, or their parts contributing to the related technologies may be embodied in the form of a software product, which is stored in a storage medium (e.g., ROM/RAM, magnetic disk, optical disk) and includes instructions for enabling a terminal device (e.g., a mobile phone, a computer, a server, an air conditioner, or a network device) to execute the method according to the embodiments of the present disclosure.

The foregoing describes some embodiments of the present disclosure with reference to the accompanying drawings, and does not therefore limit the scope of the claims of the present disclosure. Those skilled in the art can implement the present disclosure in various modifications, such as features from one embodiment can be used in another embodiment to yield yet a further embodiment, without departing from the scope of the present disclosure. Any modification, equivalent replacement, and improvement made within the technical idea of using the present disclosure should be within the scope of the right of the present disclosure.

## Claims

1. A method for implementing a white-box Optical Transport Network, OTN, hardware device, comprising:
performing (S10) an abstraction processing on a hardware device used by an OTN and making at least one constraint rule to form a low-level Application Programming Interface, API; and
acquiring, by a compiler, (S11) a customization description file of the low-level API inputted by a user, and automatically generating a connection code between a public code and a user code according to the customization description file of the low-level API inputted by the user, such that a low-level service logic is processed publically;
wherein the step of performing (S 10) an abstraction processing on a hardware device used by an OTN and making at least one constraint rule comprises:
abstracting (S102) the hardware device used by the OTN into a service processing chip, a photoelectric conversion chip and a cross-dispatching chip; and
making (S104) constraint rules for the service processing chip, the photoelectric conversion chip and the cross-dispatching chip;
wherein the customization description file is formed by:
abstracting differences between the service processing chip, the photoelectric conversion chip and the cross-dispatching chip by using domain specific language, DSL, technology to form the customization description file.

2. The method according to claim 1, further comprising:
exporting (S12) a standard overhead format from the hardware device used by the OTN;
abstracting (S13) an atomic function interface based on the exported standard overhead format; and
automatically generating (S14) an atomic function code according to the abstracted atomic function interface, so that the public code is writable on the basis of the atomic function code.

3. The method according to claim 1, further comprising:
performing (S15) an abstraction processing on the low-level API to form a high-level API.

4. An apparatus for implementing a white-box Optical Transport Network, OTN, hardware device, comprising:
a first abstraction processing module (21) configured to perform an abstraction processing on a hardware device used by an OTN and make at least one constraint rule to form a low-level Application Programming Interface, API; and
a compiler (22) configured to acquire a customization description file of the low-level API inputted by a user, and automatically generate a connection code between a public code and a user code according to the customization description file of the low-level API inputted by the user, such that a low-level service logic is processed publically;
wherein the first abstraction processing module (21) comprises:
an abstracting unit (212) configured to abstract the hardware device used by the OTN into a service processing chip, a photoelectric conversion chip and a cross-dispatching chip; and
at least one constraint rule making unit (214) configured to make constraint rules for the service processing chip, the photoelectric conversion chip and the cross-dispatching chip;
further comprising:
a description file forming unit (216) configured to abstract differences between the service processing chip, the photoelectric conversion chip and the cross-dispatching chip by using domain specific language, DSL, technology to form the customization description file.

5. The apparatus according to claim 4, further comprising:
an export module (23) configured to export a standard overhead format from the hardware device used by the OTN; and
an atomic function interface abstracting module (24) configured to abstract an atomic function interface based on the exported standard overhead format;
wherein the compiler (22) is further configured to automatically generate an atomic function code according to the abstracted atomic function interface, so that the public code is writable on the basis of the atomic function code.

6. The apparatus according to claim 4, further comprising:
a second abstraction processing module (25) configured to abstract the low-level API to form a high-level API.

7. An apparatus for implementing a white-box OTN hardware device, comprising: a memory (31), a processor (32), and an abstraction program of a white-box OTN hardware device stored on the memory (31) and operable on the processor (32), when the abstraction program of the white-box OTN hardware device is executed by the processor (32), the processor (32) implements the steps of the method for implementing a white-box OTN hardware device according to any of claims 1 to 3.

8. A computer-readable storage medium having stored thereon an abstraction program of a white-box OTN hardware device, when the abstraction program of the white-box OTN hardware device is executed by a processor, the processor implements the steps of the method for implementing a white-box OTN hardware device according to any of claims 1 to 3.

## Patentansprüche

1. Verfahren zur Implementierung einer "White-Box"-Hardware-Vorrichtung eines optischen Transportnetzwerks (Optical Transport Network, OTN), umfassend:
Durchführen (S10) einer Abstraktionsverarbeitung an einer Hardware-Vorrichtung, die von einem OTN verwendet wird, und Erstellen mindestens einer Beschränkungsregel, um eine Anwendungsprogrammierschnittstelle (Application Programming Interface, API) auf niedriger Ebene zu bilden; und
Erfassen (S11), durch einen Kompilierer, einer Anpassungsbeschreibungsdatei (Customization Description File) der von einem Benutzer eingegebenen API auf niedriger Ebene und automatisches Erzeugen eines Verbindungscodes zwischen einem öffentlichen Code und einem Benutzercode gemäß der Anpassungsbeschreibungsdatei der von dem Benutzer eingegebenen API auf niedriger Ebene, so dass eine Servicelogik auf niedriger Ebene öffentlich verarbeitet wird;
wobei der Schritt des Durchführens (S10) einer Abstraktionsverarbeitung an einer Hardware-Vorrichtung, die von einem OTN verwendet wird, und des Erstellens mindestens einer Beschränkungsregel umfasst:
Abstrahieren (S102) der vom OTN verwendeten Hardware-Vorrichtung in einen Serviceverarbeitungschip, einen photoelektrischen Umwandlungschip und einen Cross-Dispatch-Chip; und
Erstellen (S104) von Beschränkungsregeln für den Serviceverarbeitungschip, den photoelektrischen Umwandlungschip und den Cross-Dispatch-Chip;
wobei die Anpassungsbeschreibungsdatei gebildet wird durch:
Abstrahieren von Unterschieden zwischen dem Serviceverarbeitungschip, dem photoelektrischen Umwandlungschip und dem Cross-Dispatch-Chip unter Verwendung von Domänenspezifikationssprachen (Domain Specification Language, DSL)-Technologie, um die Anpassungsbeschreibungsdatei zu bilden.

2. Verfahren nach Anspruch 1, ferner umfassend:
Exportieren (S12) eines Standard-Overhead-Formats aus der vom OTN verwendeten Hardware-Vorrichtung;
Abstrahieren (S13) einer atomaren Funktionsschnittstelle basierend auf dem exportierten Standard-Overhead-Format; und
automatisches Erzeugen (S14) eines atomaren Funktionscodes gemäß der abstrahierten atomaren Funktionsschnittstelle, so dass der öffentliche Code auf der Basis des atomaren Funktionscodes beschreibbar ist.

3. Verfahren nach Anspruch 1, ferner umfassend:
Durchführen (S15) einer Abstraktionsverarbeitung an der API auf niedriger Ebene, um eine API auf hoher Ebene zu bilden.

4. Vorrichtung zur Implementierung einer "White-Box"-Hardware-Vorrichtung eines optischen Transportnetzwerks (Optical Transport Network, OTN), umfassend:
ein erstes Abstraktionsverarbeitungsmodul (21), das konfiguriert ist, um eine Abstraktionsverarbeitung an einer Hardware-Vorrichtung durchzuführen, die von einem OTN verwendet wird, und mindestens eine Beschränkungsregel zu erstellen, um eine Anwendungsprogrammierschnittstelle (API) auf niedriger Ebene zu bilden; und
einen Kompilierer (22), der konfiguriert ist, um eine Anpassungsbeschreibungsdatei der von einem Benutzer eingegebenen API auf niedriger Ebene zu erfassen und automatisch einen Verbindungscode zwischen einem öffentlichen Code und einem Benutzercode gemäß der Anpassungsbeschreibungsdatei der von dem Benutzer eingegebenen API auf niedriger Ebene zu erzeugen, so dass eine Servicelogik auf niedriger Ebene öffentlich verarbeitet wird;
wobei das erste Abstraktionsverarbeitungsmodul (21) umfasst:
eine Abstraktionseinheit (212), die konfiguriert ist, um die vom OTN verwendete Hardware-Vorrichtung in einen Serviceverarbeitungschip, einen photoelektrischen Umwandlungschip und einen Cross-Dispatch-Chip zu abstrahieren; und
mindestens eine Beschränkungsregelerstellungseinheit (214), die konfiguriert ist, um Beschränkungsregeln für den Serviceverarbeitungschip, den photoelektrischen Umwandlungschip und den Cross-Dispatch-Chip zu erstellen;
ferner umfassend:
eine Beschreibungsdateibildungseinheit (216), die konfiguriert ist, um Unterschiede zwischen dem Serviceverarbeitungschip, dem photoelektrischen Umwandlungschip und dem Cross-Dispatch-Chip unter Verwendung von Domänenspezifikationssprachen (DSL)-Technologie zu abstrahieren, um die Anpassungsbeschreibungsdatei zu bilden.

5. Vorrichtung nach Anspruch 4, ferner umfassend:
ein Exportmodul (23), das konfiguriert ist, um ein Standard-Overhead-Format aus der vom OTN verwendeten Hardware-Vorrichtung zu exportieren; und
ein atomares Funktionsschnittstellenabstrahierungsmodul (24), das konfiguriert ist, um eine atomare Funktionsschnittstelle basierend auf dem exportierten Standard-Overhead-Format zu abstrahieren;
wobei der Kompilierer (22) ferner konfiguriert ist, um automatisch einen atomaren Funktionscode gemäß der abstrahierten atomaren Funktionsschnittstelle zu erzeugen, so dass der öffentliche Code auf der Basis des atomaren Funktionscodes beschreibbar ist.

6. Vorrichtung nach Anspruch 4, ferner umfassend:
ein zweites Abstraktionsverarbeitungsmodul (25), das konfiguriert ist, um die API auf niedriger Ebene zu abstrahieren, um eine API auf hoher Ebene zu bilden.

7. Vorrichtung zur Implementierung einer "White-Box"-Hardware-Vorrichtung eines optischen Transportnetzwerks (OTN), umfassend: einen Speicher (31), einen Prozessor (32) und ein Abstraktionsprogramm einer "White-Box"-Hardware-Vorrichtung eines optischen Transportnetzwerks (OTN), das auf dem Speicher (31) gespeichert ist und auf dem Prozessor (32) ausführbar ist, wobei, wenn das Abstraktionsprogramm der "White-Box"-Hardware-Vorrichtung eines optischen Transportnetzwerks (OTN) vom Prozessor (32) ausgeführt wird, der Prozessor (32) die Schritte des Verfahrens zur Implementierung einer "White-Box"-Hardware-Vorrichtung eines optischen Transportnetzwerks (OTN) nach einem der Ansprüche 1 bis 3 implementiert.

8. Computerlesbares Speichermedium, auf dem ein Abstraktionsprogramm einer "White-Box"-Hardware-Vorrichtung eines optischen Transportnetzwerks (OTN) gespeichert ist, wobei, wenn das Abstraktionsprogramm der "White-Box"-Hardware-Vorrichtung eines optischen Transportnetzwerks (OTN) von einem Prozessor ausgeführt wird, der Prozessor die Schritte des Verfahrens zur Implementierung einer "White-Box"-Hardware-Vorrichtung eines optischen Transportnetzwerks (OTN) nach einem der Ansprüche 1 bis 3 implementiert.

## Revendications

1. Procédé de mise en oeuvre d'un dispositif matériel de réseau de transport optique en boîte blanche, OTN, comprenant :
réaliser (S10) un traitement d'abstraction sur un dispositif matériel utilisé par un OTN et faire au moins une règle de contrainte pour former une interface de programmation d'application, API, de bas niveau ; et
acquérir, par un compilateur, (S11) un fichier de description de personnalisation de l'API de bas niveau entré par un utilisateur, et générer automatiquement un code de connexion entre un code public et un code d'utilisateur en fonction du fichier de description de personnalisation de l'API de bas niveau entré par l'utilisateur, de sorte qu'une logique de service de bas niveau soit traitée publiquement ;
dans lequel l'étape consistant à réaliser (S10) un traitement d'abstraction sur un dispositif matériel utilisé par un OTN et faire au moins une règle de contrainte comprend :
abstraire (S102) le dispositif matériel utilisé par l'OTN en une puce de traitement de service, une puce de conversion photoélectrique et une puce de répartition croisée ; et
faire (S104) des règles de contrainte pour la puce de traitement de service, la puce de conversion photoélectrique et la puce de répartition croisée ;
dans lequel le fichier de description de personnalisation est formé par :
abstraire des différences entre la puce de traitement de service, la puce de conversion photoélectrique et la puce de répartition croisée en utilisant une technologie de langage de domaine spécifique, DSL, pour former le fichier de description de personnalisation.

2. Procédé selon la revendication 1, comprenant en outre :
exporter (S12) un format de sur débit standard à partir du dispositif matériel utilisé par l'OTN ;
abstraire (S13) une interface de fonction atomique sur la base du format de sur débit standard exporté ; et
générer automatiquement (S14) un code de fonction atomique en fonction de l'interface de fonction atomique abstraite, de sorte que le code public puisse être écrit sur la base du code de fonction atomique.

3. Procédé selon la revendication 1, comprenant en outre :
réaliser (S15) un traitement d'abstraction sur l'API de bas niveau pour former une API de haut niveau.

4. Appareil de mise en oeuvre d'un dispositif matériel de réseau de transport optique en boîte blanche, OTN, comprenant :
un module de traitement d'abstraction (21) configuré pour réaliser un traitement d'abstraction sur un dispositif matériel utilisé par un OTN et faire au moins une règle de contrainte pour former une interface de programmation d'application, API, de bas niveau ; et
un compilateur (22) configuré pour acquérir un fichier de description de personnalisation de l'API de bas niveau entré par un utilisateur, et générer automatiquement un code de connexion entre un code public et un code d'utilisateur en fonction du fichier de description de personnalisation de l'API de bas niveau entré par l'utilisateur, de sorte qu'une logique de service de bas niveau soit traitée publiquement ;
dans lequel le premier module de traitement d'abstraction (21) comprend :
une unité d'abstraction (212) configurée pour abstraire le dispositif matériel utilisé par l'OTN en une puce de traitement de service, une puce de conversion photoélectrique et une puce de répartition croisée ; et
au moins une unité de faire de règles de contrainte (214) configurée pour faire des règles de contrainte pour la puce de traitement de service, la puce de conversion photoélectrique
et la puce de répartition croisée ;
comprenant en outre :
une unité de formation de fichier de description (216) configurée pour abstraire des différences entre la puce de traitement de service, la puce de conversion photoélectrique et la puce de répartition croisée en utilisant une technologie de langage de domaine spécifique, DSL, pour former le fichier de description de personnalisation.

5. Appareil selon la revendication 4, comprenant en outre :
un module d'exportation (23) configuré pour exporter un format de sur débit standard à partir du dispositif matériel utilisé par l'OTN ; et
un module d'abstraction d'interface de fonction atomique (24) configuré pour abstraire une interface de fonction atomique sur la base du format de sur débit standard exporté ;
dans lequel le compilateur (22) est en outre configuré pour générer automatiquement un code de fonction atomique en fonction de l'interface de fonction atomique abstraite, de sorte que le code public puisse être écrit sur la base du code de fonction atomique.

6. Appareil selon la revendication 4, comprenant en outre :
un second module de traitement d'abstraction (25) configuré pour abstraire l'API de bas niveau pour former une API de haut niveau.

7. Appareil de mise en oeuvre d'un dispositif matériel OTN en boîte blanche, comprenant : une mémoire (31), un processeur (32), et un programme d'abstraction d'un dispositif matériel OTN en boîte blanche stocké sur la mémoire (31) et utilisable par le processeur (32), lorsque le programme d'abstraction du dispositif matériel OTN en boîte blanche est exécuté par le processeur (32), le processeur (32) met en oeuvre les étapes du procédé de mise en oeuvre d'un dispositif matériel OTN en boîte blanche selon l'une quelconque des revendications 1 à 3.

8. Support de stockage lisible par ordinateur sur lequel est stocké un programme d'abstraction d'un dispositif matériel OTN en boîte blanche, lorsque le programme d'abstraction du dispositif matériel OTN en boîte blanche est exécuté par un processeur, le processeur met en oeuvre les étapes du procédé de mise en oeuvre d'un dispositif matériel OTN en boîte blanche selon l'une quelconque des revendications 1 à 3.
